# EUROPEAN PATENT APPLICATION

(11) **EP 1 416 699 A1**
(43) Date of publication of application: **06.05.2004**
(21) Application number: 02730809.7
(22) Date of filing: 30.05.2002
(51) Int. Cl.: H04M 1/00, H04N 7/14, H04M 11/00

(54) **TELEPHONE APPARATUS HAVING VIDEO TELEPHONE FUNCTION**

(30) Priority: 25.06.2001 JP 2001190555
(71) Applicant: MATSUSHITA ELECTRIC INDUSTRIAL CO., LTD., Kadoma-shi, Osaka 571-0050 (JP)
(72) Inventor: KIKUCHI, Yasuhiro, Yokohama-shi, Kanagawa 222-0011 (JP)
(74) Representative: Grünecker, Kinkeldey, Stockmair & Schwanhäusser Anwaltssozietät
(86) International application number: PCT/JP2002/005300
(87) International publication number: WO 2003/001773

(57) **Abstract**

The present invention provides a telephone equipped with a television telephone function, which can arbitrarily use a picture previously stored in a storage unit other than a picture photographed by a camera unit so as to transmit the selected picture to a telephone communication counter party, and can be manipulated in a simple manner substantially similar to that of the normal telephone. When any one of an off-hook key (5) for television telephone and an off-hook key (6) for voice telephone is manipulated in response to a telephone call (step 701 or 702), the telephone executes a television telephone call-reception processing operation (step 703), and a call-connection processing operation (step 704). Then, when the off-hook key (5) for television telephone is manipulated, the camera unit (8) is brought into operation condition (step 705), a picture signal derived from the camera unit (8) is encoded (step 706), and then, the encoded picture signal is inputted into a central processing unit (21). When the off-hook key (6) for voice telephone is manipulated, a picture signal stored in the storage unit (20) is read (step 707) and is encoded (step 708), and then, the encoded picture signal is inputted into the central processing unit (21).

## Description

### <TECHNICAL FIELD>

The present invention is related to a portable telephone equipped with a television telephone function, a portable telephone, and other telephone sets, which are equipped with a camera, and are capable of transmitting pictures photographed by this camera to a communication counter party in combination with voice.

### <BACKGROUND ART>

In general, television telephones are known in technical fields. When such a television telephone is operated, a telephone call is firstly issued to a telephone communication counter party, and after a telephone line has been established, various sorts of television telephone operations must be carried between the own party and the telephone communication counter party. Thus, these television telephone operations and preparations thereof are very cumbersome.

Also, very recently, such portable telephones equipped with electronic cameras have been developed by which pictures photographed by these electronic cameras can be directly transmitted to telephone communication counter parties.

However, these television telephones and portable telephones equipped with the electronic cameras own a problem. That is, these television telephones/portable telephones merely transmit the pictures photographed by the cameras to the telephone communication counter parties. Also, as far as the cameras are turned ON, the pictures photographed by these cameras are merely transmitted to the telephone communication counter parties. Even in such a case that certain pictures photographed by the cameras are not wanted to be transmitted, these television telephones/portable telephones equipped with the cameras cannot be properly operated by accepting this need.

### <DISCLOSURE OF THE INVENTION>

The present invention has been made to solve the above-described problem of the prior art, and therefore, has an object to provide such a telephone equipped with a television telephone function, by which while the telephone equipped with the television telephone function can arbitrarily use a picture previously stored in a storage unit other than a picture photographed by a camera unit so as to transmit the selected picture to a telephone communication counter party, this telephone can be manipulated in a simple manner substantially similar to that of the normal telephone.

To achieve the above-described object, a telephone equipped with a television telephone function is arranged in such a manner that a ten-numeral entry key for entering a telephone number of a telephone communication counter party, an off-hook key for voice telephone, and an off-hook key for television telephone are provided on an operation unit; when the telephone number of the telephone communication party is entered by the ten-numeral entry key and the off-hook key for television telephone is manipulated, a picture signal produced by photographing by a camera unit is multiplexed with a voice signal derived from a microphone and then the multiplexed signal is transmitted, and when the telephone number of the telephone communication counter party is entered by the ten-numeral entry key and the off-hook key for voice telephone is manipulated, only the voice signal derived from the microphone is transmitted.

As a consequence, in accordance with the present invention, a live picture photographed by the camera unit can be transmitted to the telephone communication counter party by merely manipulating the off-hook key for television telephone, so that this operation of the telephone can be carried out in a very simple manner.

Also, in accordance with the present invention, the telephone equipped with the television telephone function is arranged in such a manner that while a picture previously stored in a storage unit is prepared in addition to a picture photographed by the camera unit, a selection means for selecting any one of these pictures is provided; when the telephone number of the telephone communication party is entered by the ten-numeral entry key and the off-hook key for television telephone is manipulated, one picture selected by the selection means is multiplexed with the voice signal derived from the microphone and then the multiplexed signal is transmitted.

As a consequence, in accordance with the telephone equipped with the television telephone function of the present invention, in such a case that a live picture photographed by the camera unit is not wanted to be transmitted, since this telephone is previously set in such a manner that the picture stored in the storage unit is selected by the selection means to be transmitted, this picture stored in the storage unit can be transmitted. Thus, even in such a case that the live picture photographed by the camera is not wanted to be transmitted, the telephone equipped with the television telephone function can be properly operated by accepting such a need.

### <BRIEF DESCRIPTION OF THE DRAWINGS>

Fig. 1 is a front view for schematically showing a telephone equipped with a television telephone function according to a first embodiment mode of the present invention.
Fig. 2 is a rear view for schematically indicating the telephone equipped with the television telephone function according to the first embodiment mode.
Fig. 3 shows a functional block diagram of the telephone equipped with the television telephone function according to the first embodiment mode.
Fig. 4 is a first flow chart for describing operations of the telephone equipped with the television telephone function according to the first embodiment mode.
Fig. 5 is a second flow chart for describing operations of the telephone equipped with the television telephone function according to the first embodiment mode.
Fig. 6 is a third flow chart for describing operations of the telephone equipped with the television telephone function according to the first embodiment mode.
Fig. 7 is a fourth flow chart for describing operations of the telephone equipped with the television telephone function according to the first embodiment mode.
Fig. 8 is a fifth flow chart for describing operations of the telephone equipped with the television telephone function according to the first embodiment mode.
Fig. 9 is a sixth flow chart for describing operations of the telephone equipped with the television telephone function according to the first embodiment mode.
Fig. 10 is a first flow chart for describing operations of a telephone equipped with a television telephone function according to a second embodiment mode.
Fig. 11 is a second flow chart for describing operations of the telephone equipped with the television telephone function according to the second embodiment mode.

It should be noted that in the drawings, reference numeral 1 shows a housing; reference numeral 2 represents a ten-numeral entry key; reference numeral 3 indicates a function key; reference numeral 4 shows a power supply key; reference numeral 5 represents an off-hook key for television telephone; reference numeral 6 shows an off-hook key for speech; reference numeral 7 shows a display unit; reference numeral 8 indicates a camera unit; reference numeral 9 indicates a receiver; reference numeral 10 represents a microphone; reference numeral 11 indicates a speaker; reference numerals 12, 13, and 14 denote sound holes; reference numeral 15 shows a battery pack; reference numeral 16 represents an antenna; reference numeral 17 is an image codec unit; reference numeral 18 shows a voice processing unit; reference numeral 19 shows an AD/DA-converting unit; reference numeral 20 shows a storage unit; reference numeral 21 indicates a central processing unit; reference numeral 22 represents a wireless unit; and reference numeral 23 indicates an operation unit.

### <BEST MODE FOR CARRYING OUT THE INVENTION>

Embodiment modes of the present invention will now be described with reference to drawings.

### (FIRST EMBODIMENT MODE)

First, a first embodiment mode of the present invention is explained.

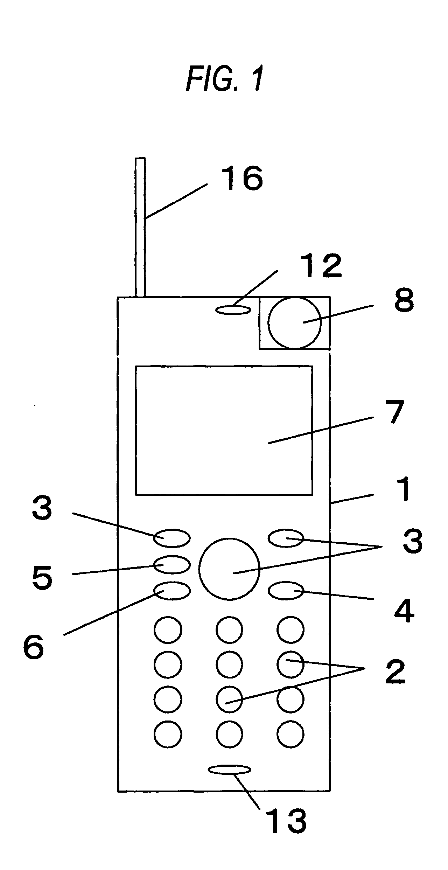

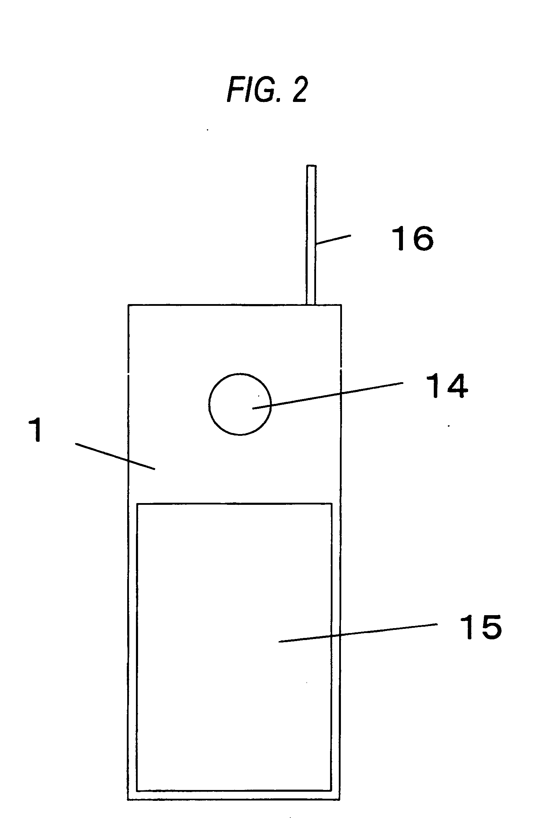

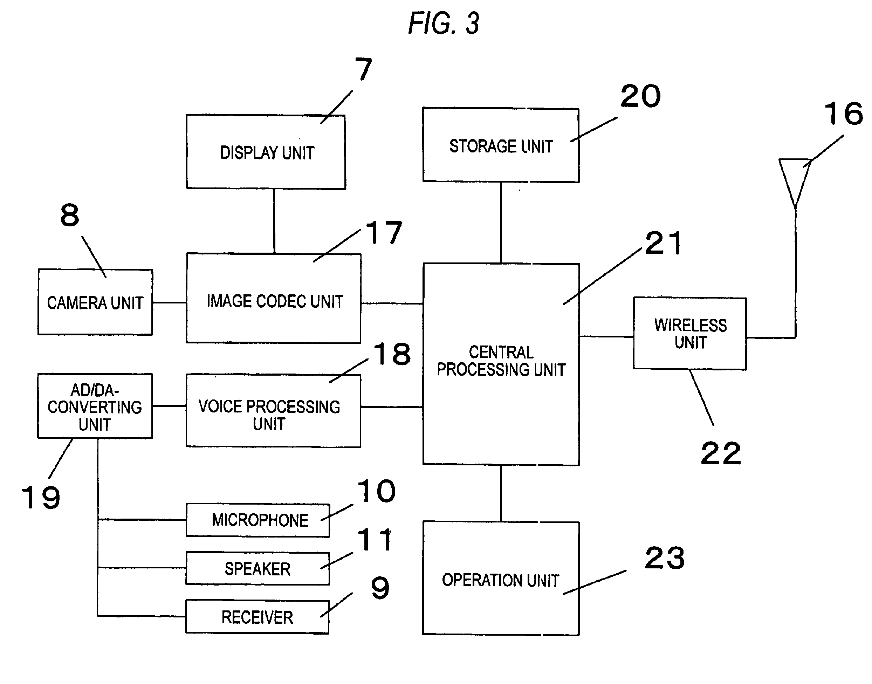

Fig. 1 and Fig. 2 are a front view and a rear view, which indicate a telephone equipped with a television telephone function according to a first embodiment mode of the present invention. Fig. 3 is a functional block diagram of this telephone equipped with the television telephone function of this first embodiment mode.

In Fig. 1 to Fig. 3, in this embodiment mode, the portable telephone equipped with the television telephone function is indicated. As apparently, a portable telephone, a normal desk-top telephone, and the like may be employed.

In Fig. 1 to Fig. 3, a ten-numeral entry key 2, a plurality of function keys 3, a power supply key 4, an off-hook key 5 for television telephone, an off-hook key 6 for speech, and the like are provided on a surface of a housing 1 which constitutes the telephone. The ten-numeral entry key 2 is used to enter numerals from 0 up to 9, and characters such as HIRAGANA-characters, KATAKANA-characters, and alphabetical characters. The plural function keys 3 are used to switch entries of these numerals and characters, and also to switch various sorts of functions. The power supply key 4 is used to turn ON/OFF a power supply, and to release a telephone line. The off-hook key 5 for television telephone is employed to perform a calling operation as a television telephone. The off-hook key 6 for speech is employed to execute a calling operation as the normal voice telephone. Furthermore, a display unit 7 constituted by a liquid crystal display device, or the like, and a camera unit 8 functioning as an electronic photographing apparatus are mounted on this surface of the housing 1.

In this case, the camera unit 8 is rotatably mounted with respect to the housing 1. Then, sound holes 12 and 13 are formed, which are located opposite to a receiver 9 and a microphone 10 (see Fig. 3) provided within the housing 1, in an upper edge portion and a lower edge portion of a surface of the housing 1, respectively. In this case, it is so assumed that an upper-sided edge portion of the housing 1 is defined as the upper edge portion, and a lower-sided edge portion thereof is defined as the lower edge portion under such a normal use condition that a user grips the housing 1 in order to use the portable telephone as either a television telephone or a voice telephone.

On the other hand, as indicated in Fig. 2, a sound hole 14 is formed, which is positioned opposite to a speaker 11 provided within the housing 1, in a rear surface of the housing 1. Also, a battery pack 15 functioning as the power supply of the telephone is mounted on a lower half portion of the rear surface of the housing 1. Then, an antenna 16 is mounted on the upper edge portion of the housing 1 in such a manner that this antenna 16 may be freely inserted/projected into/from the upper edge portion.

As indicated in Fig. 3, the housing 1 is provided within the internal space with an image codec unit 17, a voice processing unit 18, an AD/DA-converting unit 19, a storage unit 20, a central processing unit 21, a wireless unit 22, and the like. The image codec unit 17 encodes a picture signal acquired by photographing by using the camera unit 8, and decodes a received picture signal which has been coded. The voice processing unit 18 processes a voice signal to be inputted/outputted. The AD/DA-converting unit 19 analog-to-digital (A/D)-converts a voice signal derived from the voice processing unit 18, and digital-to-analog (D/A)-converts a voice signal derived from the voice processing unit 18 so as to output the converted voice signal to either the receiver 9 or the speaker 11. Several desirable illustrations, photographs, and other image data have been stored in the storage unit 20. The central processing unit 21 executes various sorts of control processing operations, and various sorts of signal processing operations. The wireless unit 22 modulates a transmission signal processed by the central processing unit 21 to output the modulated transmission signal, and demodulates a reception signal received from the antenna 16. It should be noted that reference numeral 23 shows an operation unit which is arranged by various sorts of keys 2 to 6 which are provided on the surface of the housing 1.

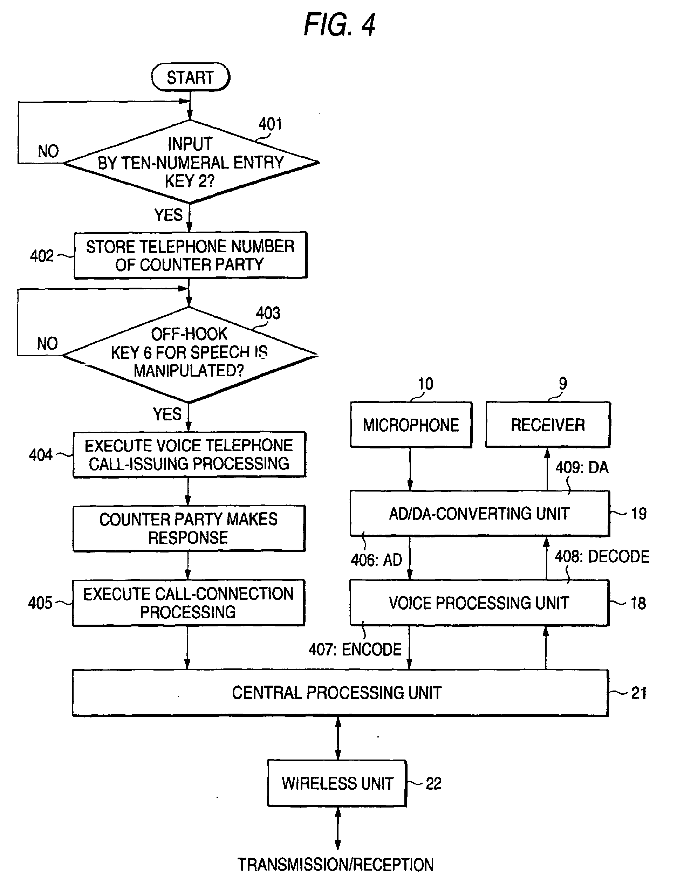

In the above-described embodiment mode, operations of the portable telephone equipped with the television telephone function will now be described with reference to flow charts shown in Fig. 4 to Fig. 8.

### 1). In the case that only a voice telephone communication is carried out:

### [OPERATIONS OF TELEPHONE PROVIDED ON CALLING SIDE]

As shown in a flow chart of Fig. 4, when a telephone number of a telephone communication counter party is firstly entered by employing the ten-numeral entry key 2 in a step 401, this entered telephone number is temporarily stored in the central processing unit 21 (step 402). In a step 403, when the off-hook key 6 for speech is manipulated, the central processing unit 21 transmits the above-described stored telephone number of the telephone communication counter party via the wireless unit 22, and performs a so-called "a calling process operation" for a voice telephone communication by this key operation (step 404).

Then, if the telephone communication counter party makes a response, then this response signal is received via the antenna 16 by the wireless unit 22, and this received response signal is entered into the central processing unit 23. As a result, a call-connection processing operation (step 405) is carried out. When the call-connection processing operation is carried out, a voice signal produced from the microphone 10 is A/D-converted by the AD/DA-converting unit 19 (step 406), and then, the digital voice data is encoded by the voice processing unit 18 (step 407). The encoded voice data is transmitted via the central processing unit 21, the wireless unit 22, and the antenna 16 to the telephone communication counter party.

A digital voice signal issued from the telephone communication counter party is received via the antenna 16 by the wireless unit 22, and the received digital voice signal is entered via the central processing unit 21 to the voice processing unit 18 so as to be decoded (step 408). The decoded digital voice signal is D/A-converted into an analog voice signal (step 409). Then, the analog voice signal is supplied to the receiver 9 so as to be reproduced, and the reproduced voice is outputted. As a result, under this condition, the normal voice telephone communication can be carried out between the own party and the telephone communication counter party.

### [OPERATIONS OF TELEPHONE PROVIDED ON TELEPHONE RECEIVING SIDE]

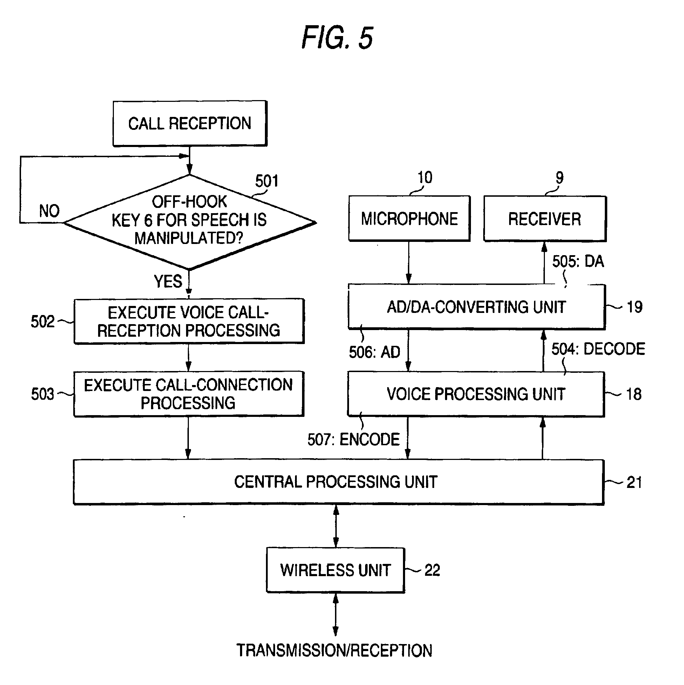

As indicated in Fig. 5, in the case that a telephone call for establishing a voice telephone communication issued from a telephone communication counter party is received, since the off-hook key 6 for speech is manipulated (step S501), the central processing unit 21 executes a voice call-reception processing operation (step 502), and executes a call-connection processing operation (step 503). As a result, under this condition, a digital voice signal issued from the telephone communication counter party may be received via the antenna 16 by the wireless unit 22. The received digital voice signal is entered via the central processing unit into the voice processing unit 18 so as to be decoded by this voice processing unit 18 (step 504), and the decoded digital voice signal is D/A-converted into an analog voice signal by the AD/DA-converting unit 19 (step 505). Then, this analog voice signal is supplied to the receiver 9 so as to be reproduced, and then the reproduced voice is outputted.

Then, similar to the previously explained operations, a voice signal produced from the microphone 10 is A/D-converted by the AD/DA-converting unit 19 (step 506), and then, the digital voice data is encoded by the voice processing unit 18 (step 507). The encoded voice data is transmitted via the central processing unit 21, the wireless unit 22, and the antenna 16 to the telephone communication counter party. As a result, under this condition, the normal voice telephone communication can be carried out between the own party and the telephone communication counter party.

### 2). In the case that the television telephone function is performed:

### [OPERATIONS OF TELEPHONE PROVIDED ON CALLING SIDE]

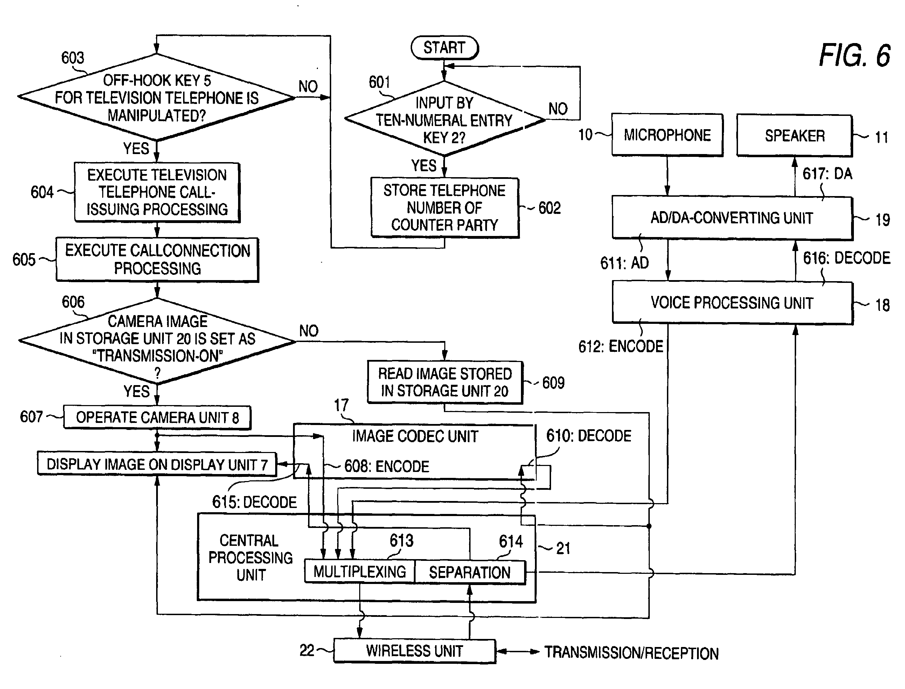

As shown in a flow chart of Fig. 6, when a telephone number of a telephone communication counter party is firstly entered by employing the ten-numeral entry key 2 in a step 601, this entered telephone number is temporarily stored in the central processing unit 21 (step 602). In a step 603, when the off-hook key 6 for television telephone is manipulated, the central processing unit 21 transmits the above-described stored telephone number of the telephone communication counter party via the wireless unit 22, and performs a so-called "a calling process operation" for a television telephone operation by this key operation (step 604).

Then, if the telephone communication counter party makes a response, then this response signal is received via the antenna 16 by the wireless unit 22, and this received response signal is entered into the central processing unit 23. As a result, a call-connection processing operation (step 605) is carried out. When the call-connection processing operation is carried out, a judging process operation is carried out in a step 606 as to whether or not a transmission setting operation of a camera image which has been previously stored in the storage unit 20 is turned ON.

In the case that such a judgment is made in the step 606 that the transmission condition of the camera image is set to an ON state, the camera unit 8 is brought into operation condition (step 607) at this time, and thus, a picture photographed by the camera unit 8 is entered into the display unit 7 so as to be displayed on this display unit 7. Also, a picture signal is encoded by the image codec unit 17 (step 608), and then, the encoded picture signal is inputted to the central processing unit 21.

In the case that such a judgment is made in the step 606 that the transmission condition of the camera image is not set to the ON state, the process operation is advanced to a step 609. In this step 609, the illustrations and other images which have been previously stored in the storage unit are read to be entered into the display unit 7 so as to be displayed on this display unit 7. Also, the picture is entered via the central processing unit 21 to the image codec unit 17 so as to be encoded (step 610), and then, the encoded picture signal is again entered into the central processing unit 21.

On the other hand, similar to the previously-explained case, a voice signal produced from the microphone 10 is A/D-converted by the AD/DA-converting unit 19 (step 611), and then, the digital voice data is encoded by the voice processing unit 18 (step 612). The encoded voice data is entered into the central processing unit 21.

As a result, both any one of the picture signal derived from the camera unit 8, which has been encoded by the image codec unit 17, and the picture signal read from the storage unit 20, and also the voice signal which has been processed by the voice processing operation are multiplexed with each other in the central processing unit 21 (step 613), and then, the multiplexed signal is transmitted via the wireless unit 22 and the antenna 16 to the communication counter party.

Both the picture signal and the voice signal, which have been multiplexed and transmitted from the communication counter party, are received via the antenna 16 by the wireless unit 22, and then the received multiplexed signal is separated into the picture signal and the picture signal by the central processing unit 21 (step 614). The separated picture signal is decoded by the image codec unit 17 (step 615), and then, the decoded picture signal is displayed on the display unit 7. Also, the separated voice signal is decoded by the voice processing unit 18 (step 616), and then, the decoded voice signal is D/A-converted by the AD/DA converting unit 19 (step 617). The analog voice signal is inputted into the speaker 11 to be reproduced so as to output voice.

As a consequence, under this condition, a television telephone communication can be carried out between the own party and the telephone communication counter party.

### [OPERATIONS OF TELEPHONE PROVIDED ON CALL RECEPTION SIDE]

Next, a description will now be made of such a case that a telephone communication counter party makes a telephone call so as to perform a television telephone communication, and then, this telephone call is received.

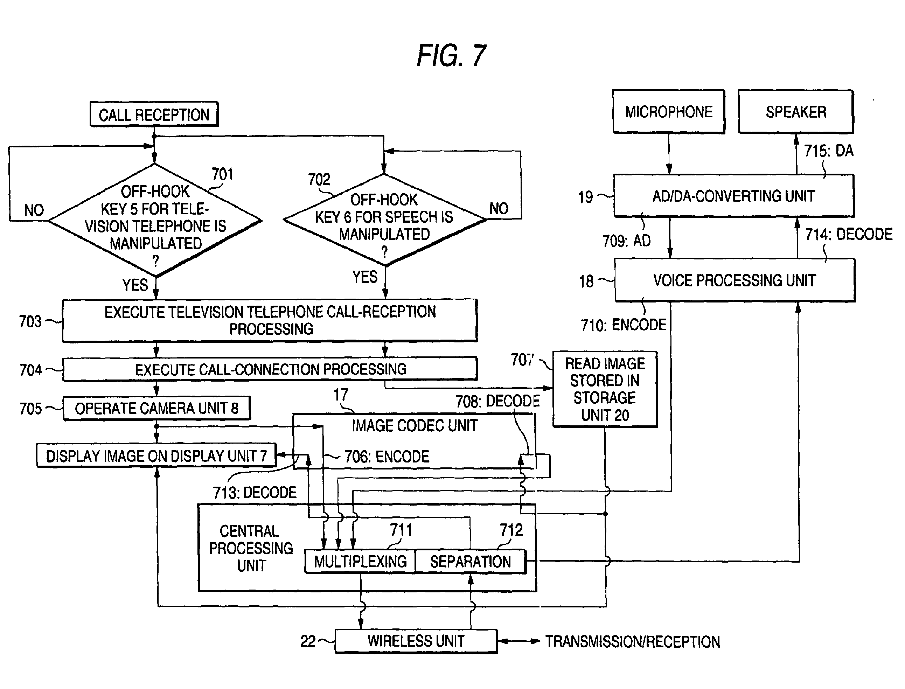

When any one of the off-hook key 5 for television telephone and the off-hook key 6 for speech is manipulated in either a step 701 or a step 702 in response to the telephone calling, as indicated in Fig. 7, the central processing unit 21 performs a television telephone call-reception processing operation (step 703), and then performs a call-connection processing operation (step 704) in any case.

Then, in the case that the off-hook key 5 for television telephone is manipulated, the camera unit 8 is brought into operation condition (step 705), so that a picture signal derived from the camera unit 8 is encoded by the image codec unit 17 (step 706), and then, the encoded picture signal is entered into the central processing unit 21.

In such a case that the off-hook key 6 for speech is manipulated, an image stored in the storage unit 20 is read out (step 707), and a picture signal of this read image is entered via the central processing unit 21 to the image codec unit 17 so as to be encoded by this image codec unit 17 (step 708), and then, the encoded picture signal is again entered into the central processing unit 21.

As previously explained, a voice signal produced from the microphone 10 is A/D-converted into digital voice data by the AD/DC-converting unit 19 (step 709), and the digital voice data is encoded by the voice processing unit 18 (step 710), and then, the encoded voice data is entered into the central processing unit 21.

As a result, both any one of the picture signal derived from the camera unit 8, which has been encoded by the image codec unit 17, and the picture signal read from the storage unit 20, and also the voice signal produced from the microphone 10, which has been encoded are multiplexed with each other in the central processing unit 21 (step 711), and then, the multiplexed signal is transmitted via the wireless unit 22 and the antenna 16 to the communication counter party who establishes the television telephone.

Similar to such a case that the television telephone is called and then the television telephone communication counter party makes the response, a signal sent from the telephone communication counter party who makes the television telephone is received via the antenna 16 by the wireless unit 22, and then, this received signal is separated into a picture signal and voice signal by the central processing unit 21 (step 712).

The separated picture signal is decoded by the image codec unit 17 (step 713), and then, the decoded picture signal is displayed on the display unit 7. Also, the separated voice signal is decoded by the voice processing unit (step 714), and then, the decoded voice signal is D/A-converted by the AD/DA-converting unit 19 (step 715). The analog voice signal is inputted into the speaker 11 to be reproduced so as to output voice. As a consequence, under this condition, a television telephone communication can be carried out between the own party and the telephone communication party.

As previously explained, in the above-described telephone equipped with the television telephone function of this embodiment mode, while the off-hook key 5 for television telephone is separately provided with respect to the off-hook key 6 for speech, this telephone is arranged as follows. That is, since the off-hook key 5 for television telephone is merely manipulated, any one of the calling process operation for executing the television telephone communication and the call-reception processing operation can be automatically carried out, and furthermore, the call-connection processing operation may be carried out. Thus, such a cumbersome operation that the off-hook key 6 for speech is manipulated so as to perform the call-connection processing operation is no longer required, although this cumbersome operation is conventionally required. Accordingly, the telephone equipped with the television telephone function of this embodiment mode owns such a merit that the manipulations thereof are very simple.

Also, according to the above-described embodiment mode, while the telephone equipped with the television telephone function is arranged in such a manner that the camera image transmission ON/OFF-conditions have been previously set to the storage unit 20, when the camera image transmission ON-condition is set, the picture derived from the camera unit 8 may be automatically switched to be transmitted, whereas when the camera image transmission OFF-condition is set, the picture which has been previously stored in the storage unit 20 may be automatically switched to be transmitted. In such a case that the image derived from the camera unit 8 is not wanted to be directly transmitted, the camera image transmission ON-condition may be previously set to the storage unit 20. Even in this case, since the image which has been previously stored in the storage unit 20 is transmitted to the television telephone communication counter party, the following merits can be achieved in such that the television telephone communication counter party can recognize that the television telephone communication has been established, and can respond through the television telephone communication.

Then, in this case, while an illustration, the self-image, and other arbitrary images may be stored in the storage unit 20, a desirable image may be arbitrarily stored and may be arbitrarily transmitted. Also, in this case, while plural sets of these pictures are stored in the storage unit 20, one of these plural pictures may be arbitrarily selected to be read out from this storage unit 20. In this case, there is such an advantage that even if an arbitrary picture is not selected every selection time, then the arbitrary picture may be transmitted by merely selecting one of the pictures which have been previously stored in the storage unit 20.

Also, according to the above-explained embodiment mode, the telephone equipped with the television telephone function is arranged as follows: That is, when the calling operation of the television telephone communication is received, in such a case that the off-hook key 5 for television telephone is manipulated so as to issue the response, the picture derived from the camera unit is switched to be transmitted. Also, in such a case that the off-hook key 6 for speech is manipulated so as to issue the response, the picture stored in the storage unit 20 is switched to be transmitted. Also, in the case of issuing the response, when the picture of the camera unit 8 is not wanted to be transmitted, there is such a merit that the off-hook key 6 for speech is arbitrarily manipulated, and thus, the picture stored in the storage unit 20 can be transmitted.

It should be understood that in the previous operation explanations of this embodiment mode, in the case of the voice telephone communication, the receiver 9 is operated, whereas in the case of the television telephone communication, the speaker 11 is operated. These receiver 9 and speaker 11 are arranged in such a manner that after the operation of the telephone equipped with the television telephone function has been once brought into the telephone communication condition, these receiver 9/speaker 11 may be arbitrarily switched.

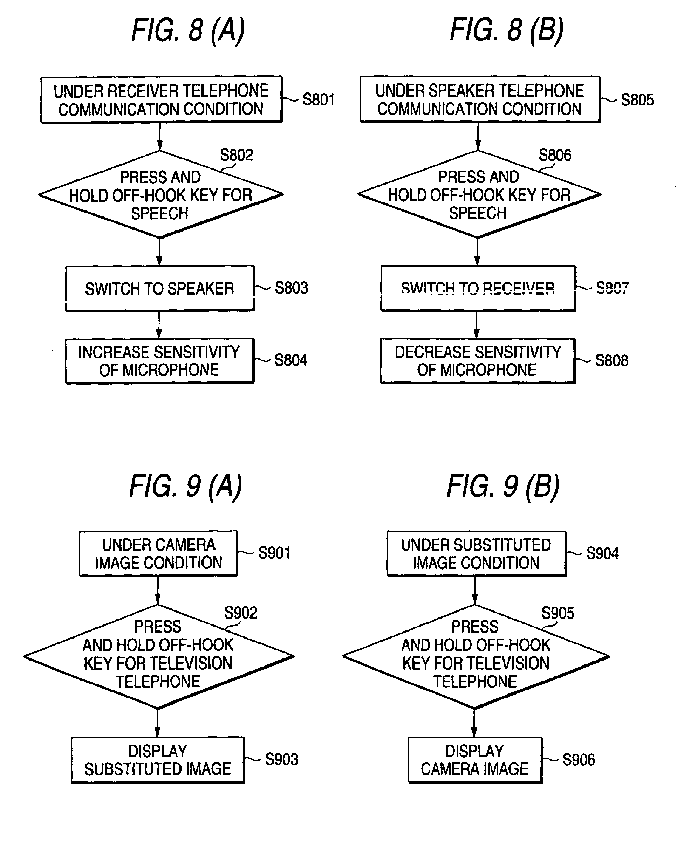

In other words, in the above-described embodiment mode, as shown in Fig. 8(A), under such a condition that the receiver is brought into the operation condition, namely, under a so-called "receiver telephone communication condition" (S801) irrespective of the voice telephone communication and the television telephone communication, when the off-hook key 6 for speech is continuously manipulated (press and hold key) for such a time period longer than, or equal to a predetermined constant time period (S802), this key manipulation is sensed by the central processing unit 21. Under control of the central processing unit 21, the operation of the receiver 9 is stopped, and the speaker 11 is brought into the operation condition instead of this receiver 9, namely, brought into a so-called "speaker telephone communication condition" (S803). Then, under this speaker telephone communication condition, the sensitivity of the microphone 10 is controlled under control of the central processing unit 21 in such a way that this sensitivity is further increased up to such a sensitivity which is required for performing a hand-free telephone communication (S804).

Also, as indicated in Fig. 8(B), under such a condition that the speaker 11 is brought into the operation condition, namely, under a so-called "speaker telephone communication condition" (S805), when the off-hook key 6 for speech is continuously manipulated (press and hold of key) for such a time period longer than, or equal to a predetermined constant time period (S806), this key manipulation is sensed by the central processing unit 21. Under control of the central processing unit 21, the operation of the speaker 11 is stopped, and the receiver 9 is brought into the operation condition instead of this speaker 11, namely, brought into a so-called "receiver telephone communication condition" (S807). Then, under this speaker telephone communication condition, the sensitivity of the microphone 10 is controlled under control of the central processing unit 21 in such a way that this sensitivity is further lowered up to such a sensitivity which is required for performing a receiver telephone communication (S808).

Also, in the previous explanations of this embodiment mode, if either the off-hook key 5 for television telephone or the off-hook key 6 for speech is manipulated in the television telephone communication, then either the picture derived from the camera unit 8 or the picture stored in the storage unit 20 is automatically switched to be transmitted. These off-hook keys 5 and 6 are arranged in such a manner that after the operation of this telephone has been brought into the telephone communication condition of the television telephone mode, these off-hook keys 5 and 6 may be arbitrarily switched.

In other words, in the above-described embodiment mode, as shown in Fig. 9(A), under such a condition that the picture derived from the camera unit 8 is transmitted (camera image condition: S901) in the television telephone communication condition, when the off-hook key 5 for television telephone is continuously manipulated (press and hold of key) for such a time period longer than, or equal to a predetermined constant time period, this key manipulation is sensed by the central processing unit 21. Under control of the central processing unit 21, the transmission of the picture derived from the camera unit 8 is stopped, and the present operation of the telephone is brought into such a condition that the picture stored in the storage unit 20 is transmitted instead of stopping of this picture (substituted image condition: S903).

Then, as indicated in Fig. 9(B), under such a condition (substituted image condition: S904) that the picture stored in the storage unit 20 is transmitted, when the off-hook key 5 for television telephone is continuously manipulated (press and hold of key) for such a time period longer than, or equal to a predetermined constant time period (S905), this key manipulation is sensed by the central processing unit 21. Under control of the central processing unit 21, the transmission of the picture stored in the storage unit 20 is stopped, and the present operation of the telephone is brought into such a condition that the picture derived from the camera unit 8 is transmitted instead of stopping of this picture (camera image condition: S906).

As previously described, in accordance with the above-described embodiment mode, the telephone equipped with the television telephone function can have such an effect. That is, if once the operation condition of this telephone has been brought into the telephone communication condition, thereafter, then the off-hook key 6 for speech and the off-hook key 5 for television telephone are continuously manipulated (press and hold of key) respectively for such a time period longer than, or equal to a predetermined constant time period, so that the receiver telephone communication condition and the speaker telephone communication condition can be arbitrarily switched, and also, the transmission condition of the picture from the camera unit 8 and the transmission condition of the picture from the storage unit 20 can be arbitrarily switched. As a result, these telephone communication conditions and picture transmission conditions can be arbitrarily selected in response to the desire of the user.

### (SECOND EMBODIMENT MODE)

Next, a telephone equipped with a television telephone function according to a second embodiment mode of the present invention will now be described.

Since a front view, a rear view, a schematic functional block of this telephone equipped with the television telephone function are identical to those of Fig. 1 to Fig. 3 as explained in the first embodiment mode of the present invention, descriptions thereof are omitted.

In the second embodiment mode of the present invention, the telephone equipped with the television telephone function is arranged as follows: That is, in any case of a telephone calling operation and a call-reception operation, four sets of television telephone communication conditions indicated in a table 1 can be immediately realized by performing two different manipulating methods of each of the off-hook key 6 for speech and the off-hook key 5 for television telephone.

**TABLE 1**

| manipulation key | manipulation method | picture to be transmitted | voice telephone communication |
|---|---|---|---|
| off-hook key for speech | instantaneous manipulation | picture from storage unit | receiver |
| off-hook key for television telephone | instantaneous manipulation | picture from camera unit | receiver |
| off-hook key for speech | press and hold of key | picture from storage unit | speaker |
| off-hook key for television telephone | press and hold of key | picture from camera unit | speaker |

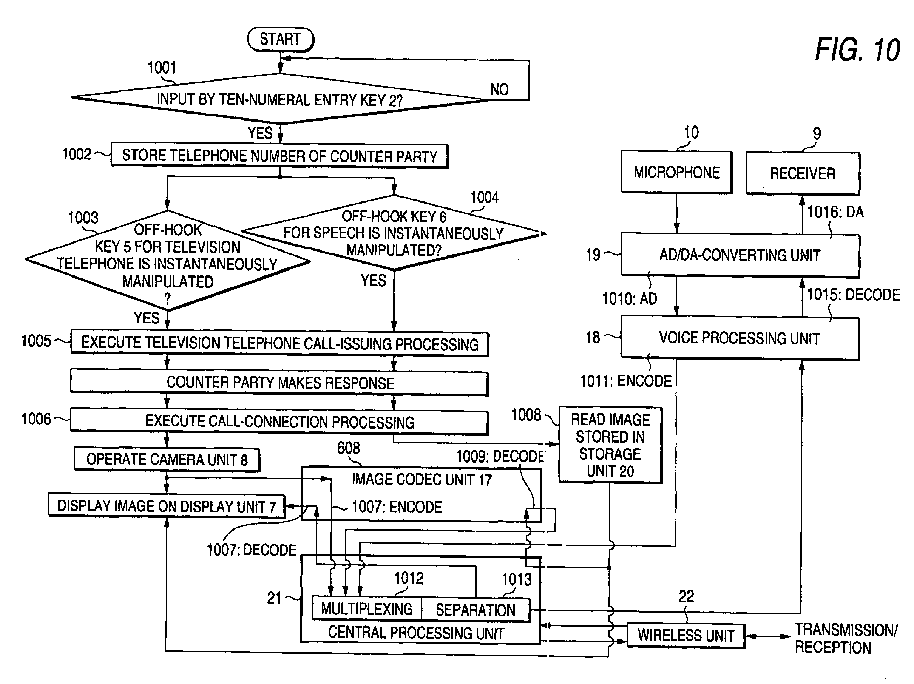

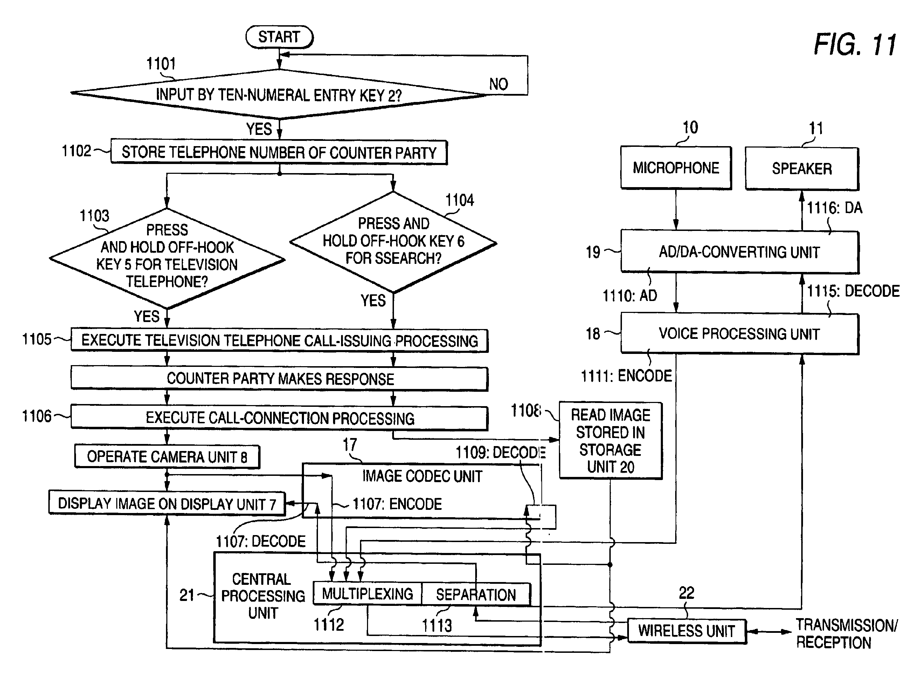

Referring now to flow charts shown in Fig. 10 and Fig. 11, operations of this telephone equipped with television telephone function will be explained.

### 1). In the case that a telephone communication is carried out by employing the receiver:

### [OPERATIONS OF TELEPHONE PROVIDED ON CALLING SIDE]

As shown in a flow chart of Fig. 10, when a telephone number of a telephone communication counter party is firstly entered by employing the ten-numeral entry key 2 in a step 1001, this entered telephone number is temporarily stored in the central processing unit 21 (step 1002).

Under this condition, when any one of the off-hook key 5 for television telephone and the off-hook key 6 for speech is instantaneously manipulated, for example, is pushed in a step 1003 and a step 1004, in response to this instantaneous key manipulation the central processing unit 21 transmits the above-described stored telephone number of the telephone communication counter party via the wireless unit 22, and performs a so-called "a calling process operation" for a television telephone operation by this key operation (step 1005).

Then, if the telephone communication counter party makes a response, then this response signal is received via the antenna 16 by the wireless unit 22, and this received response signal is entered into the central processing unit 23. As a result, a call-connection processing operation (step 1006) is carried out.
When the call-connection processing operation is carried out, any one of a picture signal derived from the camera unit 8 and a picture signal read out from the storage unit 20 is multiplexed with a voice signal produced from the microphone 10, and then, the multiplexed signal is transmitted.

In other words, in the case that the off-hook key 5 for television telephone is manipulated, a picture signal derived from the camera unit 8 is encoded by the image codec unit 17 (step 1007), and then, the encoded picture signal is entered into the central processing unit 21. On the other hand, in such a case that the off-hook key 6 for speech is manipulated, an image stored in the storage unit 20 is read out (step 1008), and a picture signal of this read image is entered via the central processing unit 21 to the image codec unit 17 so as to be encoded by this image codec unit 17 (step 1009), and then, the encoded picture signal is entered into the central processing unit 21.

Then, the voice signal produced from the microphone 10 is A/D-converted into digital voice data by the AD/DC-converting unit 19 (step 1010), and the digital voice data is encoded by the voice processing unit 18 (step 1011), and then, the encoded voice data is entered into the central processing unit 21.

As a result, in the case that the off-hook key 5 for television telephone is manipulated, the picture signal which has been produced by photographing and encoded is multiplexed with the voice signal which has been encoded by the voice processing unit 18 in the central processing unit 21 (step 1012). Also, in the case that the off-hook key 6 for speech is manipulated, the picture signal which has been read from the storage unit 20 and encoded is multiplexed with the voice signal which has been encoded by the voice processing unit 18 by the central processing unit 21 (step 1012). Then, the multiplexed signal is transmitted via the wireless unit 22 and the antenna 16 to the telephone communication counter party.

Both the picture signal and the voice signal, which have been multiplexed and transmitted from the communication counter party, are received via the antenna 16 by the wireless unit 22, and then the received multiplexed signal is separated into the picture signal and the voice signal by the central processing unit 21 (step 1013). The separated picture signal is decoded by the image codec unit 17 (step 1014), and then, the decoded picture signal is displayed on the display unit 7. Also, the separated voice signal is decoded by the voice processing unit 18 (step 1015), and then, the decoded voice signal is D/A-converted by the AD/DA-converting unit 19 (step 1016). The analog voice signal is inputted into the receiver 9 to be reproduced so as to output voice.

As a consequence, when the off-hook key 5 for television telephone is manipulated, under this condition, a telephone communication can be carried out between the own party and the telephone communication counter party by the receiver 9, while the picture signal derived from the camera unit 8 is transmitted to the telephone communication counter party. When the off-hook 6 for speech is manipulated, the telephone communication can be carried out between the own party and the telephone communication counter party, while the picture signal read from the storage unit 20 is transmitted.

### [OPERATIONS OF TELEPHONE PROVIDED ON CALL RECEPTION SIDE]

In such a case that a telephone communication counter party issues a telephone call and this telephone call is received, similar to the first embodiment mode, as indicated in Fig. 7, transmission operations as to both a picture signal derived from the camera unit 8 and a picture signal stored in the storage unit 20 are switched by performing either such an operation that the off-hook key 5 for television telephone is manipulated so as to respond, or such an operation that the off-hook key 6 for speech is manipulated so as to respond. Then, when the above-described off-hook keys 5 and 6 are manipulated, the telephone communications as to whether the telephone communications are carried out by way of the receiver 9, or the speaker 11 are switched by instantaneously manipulating these off-hook keys 5/6, or by pressing and holding these off-hook keys 5/6.

### 2). In the case that a hand-free telephone communication is carried out by employing the speaker:

### [OPERATIONS OF TELEPHONE PROVIDED ON CALLING SIDE]

As shown in a flow chart of Fig. 11, when a telephone number of a telephone communication counter party is firstly entered by employing the ten-numeral entry key 2 in a step 1101, this entered telephone number is temporarily stored in the central processing unit 21 (step 1102).

Under this condition, when any one of the off-hook key 5 for television telephone and the off-hook key 6 for speech is continuously pressed for a time period longer than, or equal to a pre-selected time period, namely, a so-called "press and hold of key" is performed in either a step 1103 or a step 1104, the central processing unit 21 transmits the above-described stored telephone number of the telephone communication counter party via the wireless unit 22, and performs a so-called "a calling process operation" for a television telephone operation by this key operation (step 1105).

Then, if the telephone communication counter party makes a response, then this response signal is received via the antenna 16 by the wireless unit 22, and this received response signal is entered into the central processing unit 23. As a result, a call-connection processing operation (step 1106) is carried out.

When the call-connection processing operation is carried out, any one of a picture signal derived from the camera unit 8 and a picture signal read out from the storage unit 20 is multiplexed with a voice signal produced from the microphone 10, and then, the multiplexed signal is transmitted.

In other words, in the case, that the off-hook key 5 for television telephone is manipulated, a picture signal derived from the camera unit 8 is encoded by the image codec unit 17 (step 1107), and then, the encoded picture signal is entered into the central processing unit 21. On the other hand, in such a case that the off-hook key 6 for speech is manipulated, and image stored in the storage unit 20 is read out (step 1108), and a picture signal of this read image is entered via the central processing unit 21 to the image codec unit 17 so as to be encoded by this image codec unit 17 (step 1109), and then, the encoded picture signal is again entered into the central processing unit 21. Then, a voice signal produced from the microphone 10 is A/D-converted into digital voice data by the AD/DC-converting unit 19 (step 1110), and the digital voice data is encoded by the voice processing unit 18 (step 1111), and then, the encoded voice data is entered into the central processing unit 21.

As a result, in the case that the off-hook key 5 for television telephone is manipulated, the picture signal which has been photographed and encoded is multiplexed by the voice signal which has been encoded by the voice processing unit 18 in the central processing unit 21 (step 1112). Also, in the case that the off-hook key 6 for speech is manipulated, the picture signal which has been read from the storage unit 20 and encoded is multiplexed with the voice signal which has been encoded by the voice processing unit 18 by the central processing unit 21 (step 1112). Then, the multiplexed signal is transmitted via the wireless unit 22 and the antenna 16 to the telephone communication counter party.

Both the picture signal and the voice signal, which have been multiplexed and transmitted from the communication counter party, are received via the antenna 16 by the wireless unit 22, and then the received multiplexed signal is separated into the picture signal and the picture signal by the central processing unit 21 (step 1113). The separated picture signal is decoded by the image codec unit 17 (step 1114), and then, the decoded picture signal is displayed on the display unit 7. Also, the separated voice signal is decoded by the voice processing unit 18 (step 1115), and then, the decoded voice signal is D/A-converted by the AD/DA-converting unit 19 (step 1116). The analog voice signal is inputted into the speaker 11 to be reproduced so as to output voice.

As a consequence, when the off-hook key 5 for television telephone is manipulated, under this condition, a telephone communication can be carried out between the own party and the telephone communication counter party by using the speaker 11 in the hand-free telephone communication mode, while the picture signal derived from the camera unit 8 is transmitted to this telephone communication counter party. When the off-hook 6 for speech is manipulated, the telephone communication can be carried out between the own party and the telephone communication counter party by using the speaker 11 in the hand-free telephone communication mode, while the picture signal read from the storage unit 20 is transmitted to this telephone communication counter party.

It should be understood that in this case, the sensitivity of the microphone is automatically controlled under control by the central processing unit 21 in such a manner that this sensitivity becomes higher than that required for the receiver telephone communication by depressing the off-hook keys 5 and 6 in order to obtain the necessary sensitivity for the hand-free telephone communication.

### [OPERATIONS OF TELEPHONE PROVIDED ON CALL RECEPTION SIDE]

In such a case that a telephone communication counter party issues a telephone call and this telephone call is received, similar to the above-described operation mode, transmission operations as to both a picture signal derived from the camera unit 8 and a picture signal stored in the storage unit 20 are switched by performing either such an operation that the off-hook key 5 for television telephone is manipulated so as to respond, or such an operation that the off-hook key 6 for speech is manipulated so as to respond. Then, when the above-described off-hook keys 5 and 6 are manipulated, the telephone communications as to whether the telephone communications are carried out by way of the receiver 9, or the speaker 11 are switched by instantaneously manipulating these off-hook keys 5/6, or by pressing and holding these off-hook keys 5/6.

As previously explained, in accordance with the telephone equipped with the television telephone function of the second embodiment mode, there are such merits that the picture to be transmitted as to the picture derived from the camera unit 8 and the picture stored in the storage unit 20 can be switched by manipulating either the off-hook key 5 for television telephone or the off-hook key 6 for speech. Also, the telephone communications as to the telephone communication by way of the receiver 9 and the telephone communication by way of the speaker 11 can be switched by instantaneously manipulating these off-hook keys 5 and 6, or by continuously manipulating these off-hook keys 5 and 6 for such a time period longer than, or equal to the predetermined constant time period. In the case that the telephone communication is carried out by way of the speaker 11, the sensitivity of the microphone 10 is increased, as compared with that required for the case that the telephone communication is carried out by way of the receiver 9 in order to perform the hand-free telephone communication in an effective manner. Since both the off-hook key 5 for television telephone and the off-hook key 6 for speech are merely switched into the two switch conditions respectively, the above-explained four telephone communication conditions can be immediately obtained, and thus, the manipulations of these off-hook keys can be very simply handled by the user.

Similar to the first embodiment mode, as shown in Fig. 8 and Fig. 9, also in this second embodiment mode, the telephone equipped with the television telephone function is arranged in such a way that since the off-hook key 6 for speech is pressed and held for the long time period under telephone communication condition, both the speaker telephone communication condition and the receiver telephone communication condition are switched and the sensitivities of the microphone are switched, and furthermore, since the off-hook key 5 for television telephone is pressed and held for the long time period, the picture derived from the camera unit and the picture read from the storage unit can be switched to be transmitted.

Also, in any of the first embodiment mode and the second embodiment mode, the speaker telephone communication and the receiver telephone communication are switched, and the picture derived from the camera unit 8 and the picture read from the storage unit 20 are switched by way of the manipulation methods of the off-hook keys. Alternatively, these switching operations may be carried out by employing other keys. Also, while a menu may be displayed on the display unit 7 by employing a menu key and the like, a desirable operation may be alternatively selected from this displayed menu.

Also, even in any of the first embodiment mode and the second embodiment mode, the picture signals are directly stored in the storage unit 20. Alternatively, the picture signals may be previously encoded and then, the encoded picture signals may be stored in the storage unit 20. In this alternative case, the picture signals need not be newly encoded by the image codec unit 17 during transmission operation, but may be directly transmitted via the central processing unit 21. Then, in this alternative case, when a picture to be transmitted is previously displayed on the display unit 7, it is very obvious that this picture must be decoded in advance.

It should also be noted that in accordance with the second embodiment mode, the telephone equipped with the television telephone function is arranged in such a manner that even when any one of the off-hook key 5 for television telephone and the off-hook key 6 for speech is manipulated, this telephone executes only the operation as the television telephone. Alternatively, the telephone may be previously set by employing another function key, the ten-numeral entry key, and the like, by which the voice telephone communication may be carried out. In other words, in the case that the telephone is set as explained above, when the ten-numeral entry key is manipulated so as to input the telephone number of the telephone communication counter party and the off-hook key 6 for speech is manipulated, only the voice telephone communication may be carried out in accordance with the flow charts shown in Fig. 4 and Fig. 5 in a similar manner to that of the first embodiment mode.

While the present invention has been described in detail, or with reference to specific embodiment modes, it is obvious for those skilled in the art that the present invention may be modified, changed, and substituted without departing from the technical spirit and scope of the present invention.

The present patent application has been made based upon Japanese Patent Application (Japanese Patent Application No. 2001-190555) filed on June 25, 2001, and contents of this Application have been incorporated herein as reference.

### <INDUSTRIAL APPLICABILITY>

As previously explained, the telephone equipped with the television telephone function of the present invention is arranged by that while the ten-numeral entry key for entering the telephone number of the telephone communication counter party, the off-hook key for voice telephone, and the off-hook key for television telephone are provided on the operation unit, when the telephone number of the counter party is inputted by the ten-numeral entry key and the off-hook key for television telephone is manipulated, the live picture signal produced by photographing by the camera unit is multiplexed with the voice signal derived from the microphone, and then, the multiplexed signal is transmitted. This telephone equipped with the television telephone function can own such an advantage that the live picture photographed by the camera unit can be transmitted to the counter party by merely manipulating the off-hook key for television telephone, and this key manipulation is very simple.

Then, the telephone equipped with the television telephone function according to the present invention is arranged by that while the picture previously stored in the storage unit is prepared in addition to the live picture photographed by the camera unit, any one of these pictures is selected by inputting the telephone number of the counter party by operating the ten-numeral entry key and by manipulating the off-hook key for television telephone, and then, this selected picture signal is multiplexed with the voice signal derived from the microphone, and thus, the multiplexed signal is transmitted. This telephone of the present invention may have such a merit that in such a case that the live picture photographed by the camera unit is not wanted to be transmitted, the picture which has been previously stored in the storage unit can be transmitted, and even when the live picture photographed by the camera unit is not wanted to be transmitted, the user can establish very effective telephone communications.

## Claims

1. A telephone equipped with a television telephone function wherein:
a ten-numeral entry key for entering a telephone number of a telephone communication counter party, an off-hook key for voice telephone, and an off-hook key for television telephone are provided on an operation unit;
when the telephone number of the telephone communication party is entered by said ten-numeral entry key and the off-hook key for television telephone is manipulated, a picture signal produced by photographing by a camera unit is multiplexed with a voice signal derived from a microphone and then the multiplexed signal is transmitted, and
when the telephone number of the telephone communication counter party is entered by said ten-numeral entry key and the off-hook key for voice telephone is manipulated, only the voice signal derived from the microphone is transmitted.

2. The telephone equipped with a television telephone function according to Claim 1, further comprising:
selection means for selecting any one of a picture photographed by said camera unit and a picture which has been previously stored in a storage unit; and
when the telephone number of the telephone communication party is entered by said ten-numeral entry key and the off-hook key for television telephone is manipulated, a picture signal of only said one picture selected by said selection means is multiplexed with the voice signal derived from the microphone and then the multiplexed signal is transmitted.

3. The telephone equipped with a television telephone function according to Claim 1 or Claim 2,
wherein, in the case that a television telephone call is received, when said off-hook key for television telephone is manipulated, the picture photographed by said camera unit is transmitted, and when said off-hook key for voice telephone is manipulated, the picture stored in said storage unit is transmitted.

4. The telephone equipped with a television telephone function according to any one of Claim 1 to Claim 3,
wherein the picture signal stored in said storage unit, the picture signal produced by photographing by said camera unit, and the voice signal derived from said microphone are encoded by encode means respectively; and
wherein said encoded picture signals are multiplexed with said encoded voice signal and then the multiplexed signal is transmitted.

5. The telephone equipped with a television telephone function according to any one of Claim 1 to Claim 4, further comprising:
separation means for separating a received signal into a picture signal and a voice signal;
decode means for decoding said separated picture signal and said separated voice signal respectively;
a display unit for displaying thereon the decoded picture signal; and
a voice producing member for converting said decoded voice signal into voice.

6. The telephone equipped with a television telephone function according to any one of Claim 1 to Claim 5,
wherein an off-hook key capable of being manipulated in a first manipulation mode and a second manipulation mode is employed as said off-hook key for television telephone and said off-hook key for voice telephone respectively; and
wherein, when each of said off-hook key for television telephone and said off-hook key for voice telephone is manipulated by switching said first manipulation mode and said second manipulation mode, a received voice signal is selectively supplied to different voice producing members.

7. The telephone equipped with a television telephone function according to Claim 6, further comprising:
switch means for switching a sensitivity of the microphone;
wherein said different voice producing members are both a speaker and a receiver; and
wherein said switch means switches a sensitivity of the microphone in such a manner that when the received voice signal is entered to the speaker, the sensitivity of said microphone is automatically set to a high sensitivity condition, whereas when the received voice signal is entered to the receiver, the sensitivity of said microphone is automatically set to a low sensitivity condition.

8. The telephone equipped with a television telephone function according to Claim 6 or Claim 7,
wherein said switch means is operated in that when a predetermined manipulation is carried out under such a condition that any one of said speaker and said receiver is used as said voice producing member to make a telephone communication, the voice producing member is automatically switched as either the receiver, or the speaker, and also, the sensitivity of the microphone is switched to either a low sensitivity condition or a high sensitivity condition.

9. A telephone equipped with a television telephone function comprising:
an off-hook key for television telephone and an off-hook key for voice telephone, wherein each of the off-hook key for television telephone and the off-hook key for voice telephone is constituted as an off-hook key operable in both a first manipulation mode and a second manipulation mode;
wherein, when said off-hook key for television telephone is manipulated, a picture photographed by a camera unit is transmitted, and when said off-hook key for voice telephone is manipulated, a picture stored in a storage unit is transmitted; and
when said off-hook key for television telephone and said off-hook key for voice telephone are manipulated in said first manipulation mode, a telephone communication can be carried out by a receiver; and
wherein, when said off-hook key for television telephone and said off-hook key for voice telephone are manipulated in said second manipulation mode, a hand-free telephone communication can be carried out by a speaker.
